# EUROPÄISCHE PATENTSCHRIFT

(11) **EP 4 648 999 B1**
(45) Veröffentlichungstag und Bekanntmachung des Hinweises auf die Patenterteilung: **22.07.2026**
(21) Anmeldenummer: 24829045.4
(22) Anmeldetag: 10.12.2024
(51) Int. Cl.: B62D 7/20

(54) **VERBINDUNGSMITTEL, FAHRZEUGLENKUNG, VERFAHREN ZUM HERSTELLEN EINES VERBINDUNGSMITTELS SOWIE VERWENDUNG EINES VERBINDUNGSMITTELS**
CONNECTING MEANS, VEHICLE STEERING, METHOD FOR PRODUCING A CONNECTING MEANS AND USE OF A CONNECTING MEANS
MOYEN DE LIAISON, DIRECTION DE VÉHICULE, PROCÉDÉ DE PRODUCTION D'UN MOYEN DE LIAISON ET UTILISATION D'UN MOYEN DE LIAISON

(30) Priorität: 21.12.2023 DE 102023136380
(43) Veröffentlichungstag der Anmeldung: 19.11.2025
(73) Patentinhaber: KAMAX Holding GmbH & Co. KG, 35315 Homberg (Ohm) (DE)
(72) Erfinder: SCHMITT, Thorsten, 35321 Laubach (DE); FAHL, Dirk, 35325 Mücke/Bernsfeld (DE)
(74) Vertreter: Müller Schupfner & Partner Patent- und Rechtsanwaltspartnerschaft mbB (Muc)
(86) Internationale Anmeldenummer: PCT/EP2024/085400
(87) Internationale Veröffentlichungsnummer: WO 2025/131854

(56) Entgegenhaltungen:
- KR-A- 20060 077 243
- US-A- 5 116 159
- US-B2- 10 597 077

## Beschreibung

Die Erfindung betrifft ein Verbindungsmittel, eine Fahrzeuglenkung und ein Verfahren zum Herstellen eines Verbindungsmittels sowie die Verwendung eines Verbindungsmittels. Des Weiteren kann die Erfindung auch eine Spurführungseinheit, insbesondere eine Lenkung, betreffen, welche Teil eines Fahrzeugs, insbesondere eines Autos, sein kann.

Verbindungsmittel, gerade auch in der Lenkung von Fahrzeugen, sind im Stand der Technik weithin bekannt. Die Verbindungsmittel dienen dazu, dass diese eine Kraft von einem Bauteil an ein anderes Bauteil übertragen können. Problematisch ist jedoch, dass diese Verbindungsmittel häufig derart stabil sind, sodass diese auf die Bauteile zu hohe Lasten übertragen und so eine Überbelastung der Bauteile hervorrufen.

Die US 10 597 077 B2 zeigt ein System und Verfahren zum Herstellen eines asymmetrischen Knickabschnitts in einem Verbindungselement, das gleichzeitig mit der Ausbildung eines sechseckigen Haltemerkmals geformt wird.

Es ist daher eine Aufgabe der Erfindung eine Überbelastung von Bauteilen zu verhindern.

Diese Aufgabe wird durch ein Verbindungsmittel gemäß Anspruch 1, mit einer Verwendung eines Verbindungsmittels gemäß Anspruch 13, mit einer Fahrzeuglenkung gemäß Anspruch 14 und mit einem Verfahren zur Herstellung eines Verbindungsmittels gemäß Anspruch 15 gelöst. Weitere Vorteile, Merkmale und Ausgestaltungen ergeben sich aus den Unteransprüchen, der Beschreibung sowie aus den Figuren.

Gemäß einem Aspekt der vorliegenden Erfindung wird ein Verbindungsmittel bereitgestellt. Erfindungsgemäß weist das Verbindungsmittel einen Gewindeabschnitt und einen Kugelkopf auf, wobei das Verbindungsmittel sich in eine Längsrichtung erstreckt, wobei eine Radialrichtung sich senkrecht von der Längsrichtung weg erstreckt, wobei eine Umlaufrichtung sich um die Längsrichtung erstreckt, wobei in Längsrichtung zwischen dem Gewindeabschnitt und dem Kugelkopf ein Verjüngungsabschnitt angeordnet ist, wobei der Verjüngungsabschnitt in Längsrichtung jeweils durch Flanken begrenzt ist, wobei der Verjüngungsabschnitt Stege aufweist, wobei die Stege sich von der einen Flanke bis zur anderen Flanke erstrecken.

Die Erfindung zeichnet sich dadurch aus, dass sich das Verbindungsmittel, insbesondere im Verjüngungsabschnitt, unter einer definierten Knicklast derart deformieren kann, dass eine Überlastung der verbundenen Bauteile verhindert wird, gerade bei der Übertragung einer Drucklast. Diese definierte Verhinderung wird durch die Torsionsbelastungsfreiheit aufgrund des Kugelkopfs in einem Zusammenspiel mit dem Verjüngungsabschnitt als Knickmöglichkeit erreicht. Durch die Erfindung kann daher erreicht werden, dass die zu verbindendenden Bauteile geschont werden und dennoch eine vollständige Entkopplung der Bauteile, z.B. durch Bruch des Verbindungsmittels, vorgebeugt wird.

Erfindungsgemäß ist ein Verbindungsmittel, welches dazu ausgestaltet ist, Kräfte, insbesondere Druckkräfte, zwischen zumindest zwei durch das Verbindungsmittel verbundene Bauteile zu übertragen. Das Verbindungsmittel kann z.B. zwischen einem Lenkgetriebe und einem Radträger eines Fahrzeugs angeordnet sein, sodass Lenkbefehle via dem Verbindungsmittel als Krafteinwirkung auf den Radträger übermittelt werden können. Ebenso können auch Kräfte ausgehend von dem Radträger auf das Lenkgetriebe via dem Verbindungsmittel übertragen werden. Dadurch kann ein Fahrer Rückmeldung über die Bodenbeschaffenheit oder die Fahrdynamik des Fahrzeugs erhalten. Das Verbindungsmittel kann insbesondere ein Langschaftkugelbolzen sein. Das Verbindungsmittel kann vorzugsweise Normalkräfte übertragen. Mit anderen Worten kann das Verbindungsmittel sowohl druck- als auch zugbelastet werden und/oder durch ein Drehmoment. Das Verbindungsmittel kann eine im Wesentlichen längliche Erstreckung entlang der Längsrichtung aufweisen. Die Längsrichtung bildet dabei die Richtung aus, in der sich die Länge des Verbindungsmittels bestimmt. Vorteilhafterweise liegt der Schwerpunkt des Verbindungsmittels auf der Längsrichtung. Die Umlaufrichtung kann eine Drehrichtung um die Längsrichtung definieren. Die Radialrichtung hingegen weist von der Längsrichtung senkrecht weg. Vorteilhafterweise bilden die Längsrichtung, die Umlaufrichtung und die Radialrichtung ein Zylinderkoordinatensystem miteinander aus, wobei die Längsrichtung die Höhenkoordinate, die Umlaufrichtung die Winkelkoordinate und die Radialrichtung die radiale Koordinate darstellen können. Der Gewindeabschnitt kann an einem distalen Ende des Verbindungsmittels in Längsrichtung angeordnet sein. Der Gewindeabschnitt kann einen zusammenhängenden Bereich definieren, worin das Verbindungsmittel mit einem Gewinde, insbesondere metrischen Gewinde, Trapezgewinde, Feingewinde oder einer sonstigen Gewindeart, versehen ist. Der Gewindeabschnitt kann eine Fase aufweisen. Der Gewindeabschnitt dient insbesondere zur reversiblen Montage des Verbindungsmittels und/oder alternativ als Einstellmöglichkeit für eine Überbrückungslänge durch das Verbindungsmittel zwischen den zu verbindenden Bauteilen. Der Gewindeabschnitt kann dazu ausgestaltet sein, in Verbindung mit einem Bauteil zu treten, insbesondere mit einem Radträger. Es kann eine Sicherungsmutter oder ein anderes schraubbares Mittel an dem Gewindeabschnitt angeordnet sein, mit welchem sich das in Eingriff stehende Bauteil, z.B. der Radträger, verspannen lässt. Dadurch kann die relative Position zwischen Verbindungsmittel und dem weiteren Bauteil, insbesondere dem Lenkgetriebe oder dem Radträger, weiter gesichert werden. Ferner kann ein Kugelkopf, insbesondere an einem anderen distalen Ende des Verbindungsmittels in Längsrichtung, insbesondere angrenzend an einen Schaftabschnitt, an dem Verbindungsmittel vorhanden sein. Über den Kugelkopf kann eine verspannungsfreie bzw. torsionsfreie Kraftübertragung zwischen Verbindungsmittel und den zu verbindenden Teilen, z.B. Radträger und/oder dem Lenkgetriebe, erfolgen. Hierdurch kann ein komplexer Spannungszustand im Verbindungsmittel verhindert werden, insbesondere um die Knicklast des Verbindungsmittels genauer zu definieren. Ein Verjüngungsabschnitt ist zwischen dem Gewindeabschnitt und dem Kugelkopf des Verbindungsmittels vorhanden. Hierdurch kann eine Belastung des Verjüngungsabschnitts bei einer Kraftübertragung zwischen Gewindeabschnitt und Kugelkopf sichergestellt werden. Der Verjüngungsabschnitt ist in Längsrichtung durch zwei Flanken begrenzt. In anderen Worten werden die distalen Enden des Verjüngungsabschnitts durch jeweils eine Flanke ausgebildet. Die Flanken können als ein Konus um die Längsrichtung ausgebildet sein. Konisch kann in diesem Zusammenhang bedeuten, dass die Flanken eine geschlossene Mantelfläche aufweisen können. Dabei kann die Mantelfläche zumindest Abschnittsweise in die Stege übergehen. Mit anderen Worten können Seiten der Stege mit der Mantelfläche verbunden sein. Anders ausgedrückt kann die konische Mantelfläche ausschließlich durch die Stege unterbrochen sein. Dadurch kann eine einfache Herstellung des Verschraubungsmittels bereitgestellt werden. Ferner kann der Konus schräg hin zu einer Mitte des Verjüngungsabschnitt verlaufen. Dadurch kann ein optimaler Kraftfluss im und/oder in den Verjüngungsbereich hinein bereitgestellt werden. Vorteilhafterweise ist die Mantelfläche des Konus durch eine ballige, insbesondere konkave oder konvexe, Ausgestaltung um die Rotationsachse gekennzeichnet. In anderen Worten kann die durch seine Rotation um die Längsachse die Mantelfläche des Konus ausbildende Form ballig, insbesondere konkave oder konvexe, sein. Der Verjüngungsabschnitt kann sich zumindest dadurch auszeichnen, dass dessen Durchmesser geringer ist, als der Durchmesser des Gewindeabschnitts oder der sich beidseits von den Flanken in Längsrichtung erstreckenden Abschnitte des Verbindungsmittels, insbesondere des Schaftabschnitts. Vorteilhafterweise ist der Verjüngungsabschnitt der Abschnitt des Verbindungsmittels mit dem kleinsten Kerndurchmesser und/oder Außendurchmesser. Das Verbindungsmittel kann somit im Verjüngungsabschnitt eine reduzierte Materialstärke aufweisen. Daher kann der Verjüngungsabschnitt eine geringere Steifigkeit z.B. als der Schaftabschnitt oder der Gewindeabschnitt aufweisen und/oder durch den Verjüngungsabschnitt kann die Knicklast des Verbindungsmittels reduziert werden. Die Knicklast des Verbindungsmittels kann also durch die Materialstärke bzw. den Durchmesser des Verjüngungsabschnitts bestimmt sein. Die Knicklast ist dabei die Knicklastgrenze, welche durch Ausknicken oder durch ein Knickmoment definiert sein kann oder bedingt sein kann. Bei einer Überbelastung des Verbindungsmittels kann es folglich zuerst im Verjüngungsabschnitt zu einer Deformierung, insbesondere Biegung oder Knickung (Eulersche Knickung), kommen, insbesondere wenn dieser auf Druck belastet ist. Der Verjüngungsabschnitt kann daher als Knicknut ausgestaltet sein. Des Weiteren sind Stege, insbesondere mehrere Stege, im Verjüngungsabschnitt vorgesehen, um das vollständige Versagen des Verbindungsmittels, z.B. in der Form eines Brechens, bei einer Knickung zu verhindern. Denkbar ist, dass durch die Geometrie und Anzahl von Stegen eine Vorzugsrichtung für das Knicken oder Biegen des Verjüngungsabschnitts erreicht wird oder verhindert werden kann. Die Stege erstrecken sich von der einen Flanke bis zu der anderen Flanke des Verjüngungsabschnitts und verbinden diese daher. In anderen Worten reichen die Stege, insbesondere jeweils, von der einen Flanke bis zu der anderen Flanke. Die Stege sind insbesondere auch derart ausgebildet, dass diese mit einem Kern des Verjüngungsabschnitts materialverbunden sind. In anderen Worten weist der Verjüngungsabschnitt einen Kern auf, von dem aus, in einer Schnittebene senkrecht zu Längsrichtung betrachtet, sich die Stege in Radialrichtung weg erstrecken. Die Stege weisen insbesondere zwei Seitenwände auf, die vorteilhafterweise eben sein können. Hierdurch kann eine einfache Herstellung erreicht werden. Die Seitenwände begrenzen die Stege jeweils insbesondere in Umlaufrichtung. Der Verjüngungsabschnitt hat aufgrund der Stege zwei Durchmesser, nämlich einen Kerndurchmesser und einen Außendurchmesser. Der Kerndurchmesser ist insbesondere der Durchmesser des Kerns. In anderen Worten der Durchmesser des Verjüngungsabschnitts ohne die Stege. Vorteilhafterweise ist der Kern rotationssymmetrisch um die Längsrichtung ausgebildet, insbesondere kreisförmig. Der Außendurchmesser hingegen ist insbesondere der kleinste mögliche Durchmesser den ein Kreis in einer Ebene senkrecht zur Längsrichtung aufweisen kann, der gerade den Verjüngungsabschnitt zwischen den Flanken inklusive der Stege umgeben kann.

Vorzugsweise können alle Stege die gleiche Höhe in Radialrichtung aufweisen. Das kann den Effekt liefern, dass das Verbindungsmittel in unterschiedlichen Winkelstellungen entlang einer Umlaufrichtung zwischen den zwei Bauteilen eingesetzt werden kann, wobei die zu erwartende Knick- oder Biegerichtung in etwa gleichbleibend sein kann. Folglich ist die Handhabung beim Einbau des Verbindungsmittels vereinfacht, da nicht auf eine bestimmte Winkel- oder Drehausrichtung des Verbindungsmittels geachtet werden muss.

Bevorzugt kann die Höhe der Stege zu dem Durchmesser des Gewindeabschnitts in einem Verhältnis von 0,02 bis 0,2, bevorzugt in einem Bereich von 0,05 bis 0,12, und besonders bevorzugt in einem Bereich von 0,08 bis 0,095, liegen. Die Höhe der Stege kann als die Hälfte der Differenz von Kerndurchmesser zu Außendurchmesser des Verjüngungsabschnitts definiert werden. Alternativ kann die Höhe auch als der maximale Abstand der Stege in Radialrichtung vom Kern definiert sein. Der Kerndurchmesser kann jenem Durchmesser des Verjüngungsabschnitts ohne Stege entsprechen. Der Außendurchmesser kann durch den kleinstmöglichen Kreis in einer Ebene senkrecht zur Längsrichtung, die gerade den Verjüngungsabschnitt inklusive den Stegen umfasst, definiert sein. Der maßgebliche Durchmesser des Gewindeabschnitts ist insbesondere dessen Außendurchmesser. In einem Bereich von 0,02 bis 0,2 können die Stege besonders einfach hergestellt werden. In einem Bereich von 0,05 bis 0,12 kann eine besonders kostengünstige und werkzeugschonende Herstellung der Stege bewirkt werden. In einem Bereich von 0,08 bis 0,095 kann eine besonders gleichmäßige Knick- oder Biegewirkung innerhalb des Verjüngungsabschnitts herbeigeführt werden.

Vorzugsweise kann die Höhe der Stege zu dem Außendurchmesser des Verjüngungsabschnitts in einem Bereich von 0,01 bis 0,15, bevorzugt in einem Bereich von 0,02 bis 0,1, besonders bevorzugt in einem Bereich von 0,04 bis 0,08, liegen. In dem Bereich von 0,05 bis 0,15 kann eine möglichst einfache Fertigung erzielt werden. Im Bereich von 0,07 bis 0,11 kann eine besonders gleichmäßige Spannungsverteilung bei Knickung innerhalb des Verjüngungsabschnitts herbeigeführt werden, sodass eine vordefinierte Knicklast möglichst genau eingestellt werden kann.

Vorzugsweise kann der Abstand der Flanken in Längsrichtung zu einander Mindestens 1 cm, bevorzugt mindestens 2 cm, und besonders bevorzugt mindestens 3 cm betragen. Bei einer Länge von mindestens 1 cm kann eine hohe Wahrscheinlichkeit der Knickung des Verbindungsmittels im Verjüngungsabschnitt erreicht werden. Bei dem Abstand von mindestens 2 cm kann ein besonders ausgewogenes Verhältnis aus übertragbaren Kräften zu Überbelastungsschutz der angrenzenden Bauteile erzielt werden. Bei dem Abstand von mindestens 3 cm kann ein gesteigerter Schutz der angrenzenden Bauteile oder Abschnitte erzielt werden.

Vorzugsweise kann das Verhältnis des Außendurchmessers des Verjüngungsabschnitts zu dem Abstand der Flanken in Längsrichtung in einem Bereich von 0,2 bis 0,8, bevorzugt von 0,35 bis 0,7, und besonders bevorzugt von 0,45 bis 0,65, liegen. In einem Bereich von 0,2 bis 0,8 kann eine einfache Fertigung erzielt werden. Im Bereich von 0,35 bis 0,7 kann eine besonders definierte Ausknickung im Verjüngungsabschnitt herbeigeführt werden. Bei einem Verhältnis im Bereich von 0,45 bis 0,65 kann eine ausreichende Sicherheit gegen Bruch und eine gute Ausknickungseigenschaft bereitgestellt werden.

Vorzugsweise können sich die Stege parallel zur Längsrichtung erstrecken, oder einen verdrehten Verlauf in Richtung der Längsrichtung und/oder in Umlaufrichtung aufweisen. Dadurch, dass sich die Stege parallel entlang der Längsrichtung erstrecken, kann eine einfache Fertigung erfolgen. Ein verdrehter Verlauf der Stege kann als helixförmige, insbesondere spiralförmige, Erstreckung entlang der Längsrichtung ausgestaltet sein. Mit anderen Worten erstreckt sich zumindest ein Steg sowohl entlang der Längsrichtung als auch in Umlaufrichtung, ähnlich einem Gewindegang. Folglich kann eine bevorzugte Knickrichtung verhindert werden. Daher ist hier die Ausknickung richtungsunabhängiger als bei geraden Segen.

Vorzugsweise können die Stege in Umlaufrichtung äquidistant zueinander angeordnet sein. Das kann den Effekt liefern, dass der Verjüngungsabschnitt eine zumindest gewisse Richtungsunabhängigkeit beim Ausknicken aufweist. Folglich kann das Verbindungsmittel in unterschiedlichen Winkelpositionen eingebaut werden, ohne dass eine Vorzugsbiegerichtung vorliegt. Dadurch wird der Einbau des Verbindungsmittels vereinfacht.

Vorzugsweise können die Stege, insbesondere in Umfangsrichtung, zwei parallele Seiten aufweisen, deren Abstand zueinander zu dem Durchmesser des Verjüngungsabschnitts (60) insbesondere ein Verhältnis von 0,05 bis 0,6, bevorzugt von 0,05 bis 0,3 und besonders bevorzugt von 0,1 bis 0,2 aufweisen kann. Insbesondere wird dadurch die Dicke der Stege in ein Verhältnis zu dem Durchmesser des Verjüngungsabschnitts gesetzt. Dieses Verhältnis ist besonders sinnvoll, da hierdurch das Biegeverhalten des Verschraubungsmittels an einen von äußeren Vorgaben bestimmten, insbesondere dynamischen, Lastfall angepasst werden kann. Mit anderen Worten kann ein kleines Verhältnis einen weicheren und damit biegefreudigeren Verjüngungsbereich festlegen, als ein größeres Verhältnis. Vorteilhafterweise kann im Verhältnis von 0,05 bis 0,6 eine Schönung zum Verschraubungsmittel angrenzender Bauteile bei einer dynamischen Belastung erreicht werden. Bei 0,05 bis 0,3 kann eine besonders vorteilhafte einfache Herstellung des Verbindungsmittels bereitgestellt werden. Bei dem Verhältnis von 0,1 bis 0,2 kann ein besonders ausgewogenes Verhältnis zwischen Kraftaufnahme durch das Verschraubungsmittel und Schonung angrenzender Bauteile erreicht werden.

Vorzugsweise kann der Verjüngungsabschnitt zumindest drei, bevorzugt zumindest vier, Stege aufweisen. Es hat sich herausgestellt, dass bei drei Stegen eine ausreichende Festigkeit des Verbindungsmittels resultiert, wobei eine besonders vorteilhafte Kraftaufnahme durch die Knickung bei Überbelastung realisiert werden kann. Bei vier Stegen kann eine besonders gute Spannungsverteilung im Verjüngungsbereich erreicht werden, sodass eine hohe Verformungsenergieaufnahme stattfindet. Vorteilhafterweise ist eine ungerade Anzahl von Stegen vorgesehen, um eine Unabhängigkeit der Knicklast von der Einbaulauge zu erreichen.

Vorzugsweise kann zwischen den Flanken des Verjüngungsabschnitts ein konstanter Außendurchmesser und/oder ein konstanter Kerndurchmesser ausgebildet sein. Das kann den Vorteil einer günstigen und schnellen Fertigung liefern. In anderen Worten kann der Kern des Verjüngungsabschnitts konstant zwischen den Flanken ausgebildet sein.

Vorzugsweise kann der Verjüngungsabschnitt ein werkzeugeingriffsfreier Abschnitt sein. Mit anderen Worten kann der Verjüngungsabschnitt gerade so ausgebildet sein, dass ein Werkzeug, beispielsweise ein Maulschlüssel, in diesem Bereich nicht formschlüssig mit dem Verbindungsmittel eingreifen kann. Insbesondere können die Stege gerade so ausgeformt sein, dass das Werkzeug nicht mit den Stegen formschlüssig eingreifen kann. Dadurch kann bezweckt werden, dass ein Anwender Drehmoment gerade nicht über den Verjüngungsbereich in das Verbindungsmittel einleiten kann. Dies könnte nämlich bei einer fehlerhaften oder fahrlässigen Anwendung der Fall sein. Somit kann die Ausgestaltung des Verjüngungsbereichs oder der Stege innerhalb des Verjüngungsbereichs dazu beitragen unglückliche Fehler gemäß dem Poka-Yoke-Prinzip zu vermeiden.

Vorzugsweise kann das Verbindungsmittel einen Betätigungsabschnitt aufweisen, wobei der Betätigungsabschnitt einen Mehrkant, insbesondere einen Sechskant, aufweisen kann oder der Betätigungsabschnitt kann durch einen Mehrkant, insbesondere einen Sechskant, ausgebildet sein. Der Betätigungsabschnitt kann dazu ausgestaltet sein, in eine Gegenstruktur eines Werkzeugs formschlüssig eingreifbar zu sein. Der Betätigungsabschnitt kann dabei ein Moment in Umlaufrichtung aufnehmen und in das Verbindungsmittel einleiten. Dadurch kann das Verbindungsmittel rotiert und in ein angrenzendes Bauteil, insbesondere in ein Bauteil des Lenkgetriebes oder des Radträgers, mittels des Gewindeabschnitts verschraubt werden. Der Betätigungsbereich kann ferner von einem Kreis, in einer Ebene senkrecht zur Längsrichtung, umgeben sein, dessen Durchmesser gleichgroß, insbesondere kleiner, als der Durchmesser des Schaftabschnitts sein kann. Das kann den Effekt eines vereinfachten Fertigungsschrittes liefern.

Vorzugsweise kann der Betätigungsabschnitt in Längsrichtung zwischen dem Kugelkopf und dem Verjüngungsabschnitt liegen. Dadurch kann eine besonders gute Zugänglichkeit zu dem Betätigungsbereich bereitgestellt werden, insbesondere in einem eingebauten Zustand des Verbindungsmittels. Der Betätigungsbereich kann an einer Flanke des Verjüngungsabschnitts angrenzen. Zusätzlich oder alternativ kann der Betätigungsbereich an dem Kugelkopf angrenzen.

Vorzugsweise können der Betätigungsabschnitt und der Verjüngungsabschnitt voneinander getrennte Abschnitte sein. Mit anderen Worten können der Betätigungsabschnitt und der Verjüngungsabschnitt axial voneinander entlang der Längsrichtung beabstandet sein oder aneinander angrenzen. Wiederum anders ausgedrückt können der Verjüngungsabschnitt und der Betätigungsabschnitt in voneinander unterschiedlichen Bereichen des Verbindungsmittels ausgebildet sein. In anderen Worten können diese Abschnitte überlappungsfrei zu einander ausgebildet sein. Das kann den Effekt liefern, dass das mit einer Gegenstruktur versehenes Werkzeug das Verbindungsmittel gerade nicht im Verjüngungsbereich mit deinem Drehmoment beaufschlagt. Somit kann eine gesteigerte Drehmomentaufnahme in dem relativ zum Verjüngungsabschnitt dickeren Betätigungsabschnitt erfolgen.

Vorzugsweise kann der Gewindeabschnitt und/oder der Kugelkopf ein distales Ende in Längsrichtung des Verbindungsmittels ausbilden. Mit anderen Worten kann das Verbindungsmittel zu einem ersten Ende durch den Gewindeabschnitt und/oder zu einem Ende durch den Kugelkopf begrenzt sein. Hierdurch kann ein besonders großer Abstand zwischen den Krafteinleitungspunkten des Verbindungsmittels erreicht werden, so dass die überbrückbare Länge mittels des Verbindungsmittels im Vergleich zu der Länge des Verbindungsmittels optimiert wird.

Vorzugsweise ist das Verbindungsmittel einstückig. Mit anderen Worten umfasst das Verbindungsmittel über seine jeweiligen Bereiche und Abschnitte ein einziges Materialgefüge. Genauer gesagt sind der Gewindeabschnitt, der Verjüngungsabschnitt mit Flanken, der Betätigungsbereich, der Schaftabschnitt und der Kugelkopf stoffschlüssig miteinander untrennbar verbunden, insbesondere aus einem einzigen Ursprungskörper geformt. Das kann den Effekt einer gesteigerten Widerstandsfähigkeit gegenüber äußeren Kräften und eine gleichmäßige Kraftbeaufschlagung des gesamten Verbindungsmittels bieten.

Um besonders große Längen zu erreichen kann es Vorteilhaft sein, wenn der Kugelkopf mittels Schweißens angebunden ist. In anderen Worten kann der Kugelkopf stoffschlüssig gefügt sein. Hierdurch kann kostengünstig ein langes Verbindungsmittel hergestellt werden.

Vorzugsweise kann der Gewindeabschnitt und/oder der Verjüngungsabschnitt durch Umformung, insbesondere durch eine kalte Umformung, hergestellt sein. Hierdurch kann insbesondere eine kostengünstige Fertigung erzielt werden. Sollte der Verjüngungsabschnitt durch ein Umformen gefertigt werden, so kann - aufgrund der Verfestigung bei der Herstellung - Material und somit Kosten eingespart werden. Des Weiteren resultiert hierdurch ein verhältnismäßig leichtes Verbindungsmittel. Der Gewindeabschnitt und/oder der Verjüngungsabschnitt können durch Walzen oder Gesenkschmieden geformt sein.

Vorzugsweise kann der Winkel der Flanken mit der Längsrichtung in einem Bereich von 10° bis 45° liegen. Mittels kleinerer Winkel kann ein langsamerer, insbesondere geringerer, Anstieg des Durchmessers erzielt werden, als mit größeren Winkeln. Mit anderen Worten kann die Differenz des Kerndurchmessers des Verjüngungsabschnitts auf den Durchmesser des Betätigungsabschnitts, respektive Gewindeabschnitts, bei kleineren Winkeln auf größerer Strecke in Längsrichtung kompensiert werden, als bei größeren Winkeln. Bei kleineren Winkeln kann dadurch ein besonders weicher Übergang von Kraftlinien in den Verjüngungsabschnitt erreicht werden, wobei bei größeren Winkeln die Gesamtsteifigkeit des Verbindungsmittels gesteigert sein kann. Aufgrund dieser Erkenntnis hat sich ein Bereich von 10° bis 45° als besonders vorteilhaft herausgestellt.

Vorzugsweise kann das Verbindungsmittel aus einem Material mit einer Zugfestigkeit von mindestens 600 N/mm², bevorzugt von mindestens 800 N/mm² ausgebildet sein. Die Zugfestigkeit von mindestens 600 N/mm² stellt eine Mindestkraftübertragung sicher. Bei mindestens 800 N/mm² können auch hohe Kräfte sicher übertragen werden, insbesondere kann hierdurch ein Einsatz in Fahrzeugen oder Lenkungen sicher erreicht werden.

Vorzugsweise kann zwischen dem Betätigungsabschnitt oder dem Verjüngungsabschnitt und dem Kugelkopf ein Schaftabschnitt oder mehrere Schaftabschnitte mit jeweils konstantem Durchmesser vorhanden sein. Bei mehreren Schaftabschnitten können diese zueinander gleiche oder unterschiedliche Durchmesser aufweisen. Durch den oder die Schafabschnitte kann eine besonders gleichmäßige Krafteinleitung in das Verbindungsmittel eingeleitet werden. Der Schaftabschnitt kann die Erstreckung des Verbindungsmittels entlang der Längsrichtung maßgeblich bestimmen, insbesondere den Abstand zwischen Kugelkopf und Verjüngungsabschnitt festlegen. Je nach geometrischen Erfordernissen, insbesondere der Kinematik der Fahrzeuglenkung, kann die Länge des Schaftabschnitts variiert werden. Folglich sind unterschiedliche Längen des Schaftabschnitts möglich.

Vorzugsweise kann der Schaftabschnitt eine zylindrische Mantelfläche aufweisen. Denkbar ist auch, dass der Schaftabschnitt einen konstanten Durchmesser entlang seiner Erstreckung parallel zur Längsrichtung aufweisen kann. Anders gesagt kann der Schaftabschnitt rotationssymmetrisch sein. Damit kann sich der Vorteil einer besonders einfachen Ausgestaltung und Herstellung des Verbindungsmittels ergeben.

Vorzugsweise kann der Schaftabschnitt eine größere Erstreckung in Längsrichtung aufweisen als der Verjüngungsabschnitt und/oder der Gewindeabschnitt. Das kann zur Folge haben, dass der Knick- oder Biegebereich relativ zu einer Gesamtlänge des Verbindungsmittels in einem verhältnismäßig kleinen und damit definierten Bereich, insbesondere im Verjüngungsabschnitt, angeordnet sein kann.

Gemäß einem weiteren Aspekt der vorliegenden Erfindung wird die Verwendung eines Verbindungsmittels in einem Fahrzeug und/oder als Spurstange bereitgestellt. Das Verbindungsmittel kann z.B. zur Justage der Vor- bzw. Nachspur eingesetzt werden, sodass ein relativer Abstand entlang einer Längsrichtung zwischen zwei zusammenwirkenden Bauteilen einer Radaufhängung, insbesondere der Radaufhängung einer lenkbaren Achse, durch das Verbindungsmittel eingestellt werden kann. Durch Rotation des als Spurstange ausgestalteten Verbindungsmittels, kann der relative Abstand variiert werden, indem ein Gewindeabschnitt in ein angrenzendes Bauteil weiter hinein- oder herausverlagert, insbesondere gedreht, wird. Durch die Verwendung kann daher die Sicherheit des Fahrzeugs und/oder der Lenkstange durch die Ausknickmöglichkeit verbessert werden.

Gemäß einem weiteren Aspekt der vorliegenden Erfindung wird eine Lenkung eines Fahrzeugs mit einem Verbindungsmittel wie vorhergehend oder nachfolgend beschrieben bereitgestellt. Insbesondere an lenkbaren Achsen des Fahrzeugs kann das Verbindungsmittel Bestandteil der Fahrzeuglenkung sein. Indem das Verbindungsmittel der Fahrzeuglenkung justiert wird, kann die Spur eines Rades achsseitig individuell eingestellt werden und durch das Verbindungsmittel kann ein definiertes Ausknicken sichergestellt werden, wobei jedoch ein totales Versagen der Lenkung dennoch verhindert werden kann.

Gemäß einem weiteren Aspekt der vorliegenden Erfindung wird ein Verfahren zur Herstellung eines Verbindungsmittels bereitgestellt, umfassend die nachfolgenden Schritte. Bereitstellen eines Verbindungsmittelrohlings, insbesondere durch eine Ablängung eines Drahtes. Umformen eines Teils des Verbindungsmittelrohlings zur Schaffung eines Verjüngungsabschnitts, wobei hierbei Stege und Flanken des Verjüngungsabschnitts ausgeformt werden, wobei die Flanken den Verjüngungsabschnitt jeweils in Längsrichtung begrenzen und die Stege sich von der einen Flanke bis zur anderen Flanke erstrecken und Umformen eines Teils des Verbindungsmittelrohlings zur Schaffung eines Gewindeabschnitts. Der Verbindungsmittelrohling umfasst dabei ein umformbares Gefüge, insbesondere ein Metallgefüge, welches zur Umformung geeignet ist. Umformungsprozesse können sowohl heiß, als auch kalt erfolgen, wobei die Umformschritte des Verfahrens bevorzugt kalt erfolgen. Fertigungsschritte können Walzen, Strangpressen, Gesenkschmieden, Schmieden, Stanzen oder Zugumformen umfassen, wobei die Fertigungsschritte nicht auf die genannten Schritte begrenzt sind. Das Ablängen eines Drahtes kann durch Abscheren oder Brechen erfolgen, wobei eine definierte und wiederholbare Länge von einem endlosen Draht wiederholbar abgetrennt werden kann. Mit anderen Worten kann immer ein gleich langer Abschnitt von dem endlosen Draht abgetrennt werden. Beispielsweise durch zumindest zweie Halbzeuge kann ein abgetrennter Drahtabschnitt derart umgeformt, insbesondere kalt umgeformt, werden, dass der Verjüngungsabschnitt, die daran angeordneten Stege und die Flanken in einem Arbeitsschritt aus dem Materialgefüge entstehen. Der Gewindeabschnitt kann bevorzugt durch ein Walzverfahren hergestellt werden, um hohe mechanische Eigenschaften und/oder kostengünstig hergestellt zu werden.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Ferner gelten Ausgestaltungen und Vorteile, die in Verbindung mit der Vorrichtung genannt wurden analog auch für das Verfahren und anders herum.

Im Folgenden werden Ausführungsformen der vorliegenden Erfindung unter Bezugnahme auf die beigefügten Figuren im Detail beschrieben. Dabei zeigen:
- **Fig.1:**: Ein Verbindungsmittel mit längsverlaufenden Stegen;
- **Fig.2:**: Ein Verbindungsmittel gemäß Figur 1;
- **Fig.3:**: Ein Verbindungsmittel mit spiralförmig verlaufenden Stegen gemäß einer weiteren Ausführungsform der vorliegenden Erfindung; und
- **Fig.4:**: Ein Verbindungsmittel gemäß Figur 3.

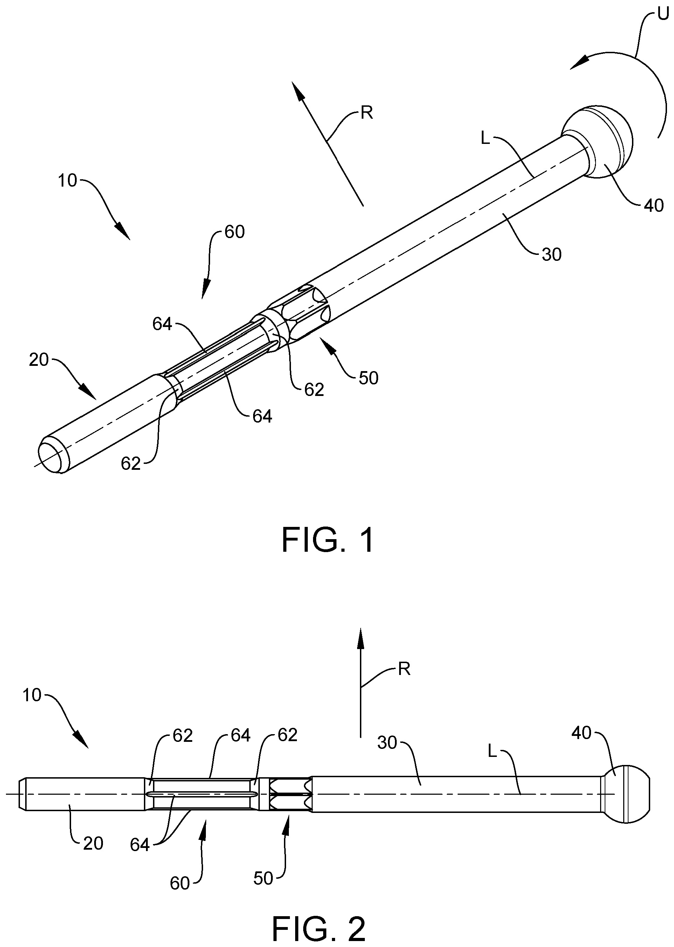

**Figur 1** zeigt ein Verbindungsmittel 10, welches in der Figur 2 in einer anderen Perspektive gezeigt ist. Das sich in eine Längsrichtung L erstreckende Verbindungsmittel 10 weist an einem ersten distalen Ende in Längsrichtung L einen Gewindeabschnitt 20 und an einem zweiten dazu gegenüberliegenden Ende in Längsrichtung L einen Kugelkopf 40 auf. Senkrecht zu der Radialrichtung R ist eine Umlaufrichtung U definiert, wobei diese beiden Richtungen wiederum senkrecht auf der Längsrichtung L stehen. Der Gewindeabschnitt 20 umfasst ein Gewinde bzw. ist durch ein Gewinde ausgebildet, wobei der Abschnitt durch eine Fase begrenzt ist, welche ausgehend von dem Gewinde an dem ersten Ende angeordnet ist. Zwischen dem Gewindeabschnitt 20 und dem Kugelkopf 40 ist ein Verjüngungsabschnitt 60, insbesondere zum Gewindeabschnitt 20 angrenzend, angeordnet. Denkbar ist auch, dass zwischen Gewindeabschnitt 20 und Verjüngungsbereich 60 ein Zwischenbereich besteht. Dadurch kann der Verjüngungsabschnitt 60 von dem Gewindeabschnitt 20 derart beabstandet sein, dass der Gewindeabschnitt 20 von einer Verformung, insbesondere Knickung oder Biegung, des Verjüngungsabschnittes 60 unbeeinflusst sein kann. Der Verjüngungsabschnitt 60 ist entlang der Längsrichtung L von zwei Flanken 62 begrenzt. Der Kerndurchmesser des Verjüngungsabschnitts 60 ist geringer als der Außendurchmesser des Gewindebereichs 20. Des Weiteren ist der Kerndurchmesser des Verjüngungsabschnittes 60 kleiner als der Durchmesser eines dazu distalen Schaftabschnitts 30. Die Flanken 62 begrenzen den Verjüngungsabschnitt 60 zu den benachbarten Bereichen, insbesondere Gewindeabschnitt 20 und Schaftabschnitt 30. Mit anderen Worten kompensieren die Flanken 62 gezeigte Querschnittssprünge. Zwischen den beiden Flanken 62 des Verjüngungsabschnitts 60 erstrecken sich mehrere Stege 64 entlang der Längsrichtung L. Die Stege 64 können auch als längliche Erhöhungen aufgefasst werden, welche eine Höhe entlang der Radialrichtung R aufweisen. Mit anderen Worten stehen die Stege 64 über den Kern des Verjüngungsabschnitts 60 in Radialrichtung R hervor. In Fig. 1 sind zwei Stege 64 im Verjüngungsbereich 60 sichtbar. Es können drei, vier oder auch mehr als vier Stege 64 am Verjüngungsbereich 60 angeordnet sein. Der Schaftabschnitt 30 grenzt an dem Kugelkopf 40 an. Zwischen einer Flanke 62 des Verjüngungsbereichs 60 und dem Schaftabschnitt 30 befindet sich ein Betätigungsbereich 50. Der Betätigungsbereich 50 kann eine Eingriffsstruktur sein. Diese Eingriffsstruktur ist als Sechskant ausgestaltet. Weiterhin kann die Eingriffsstruktur auch als Mehrkant oder anderweitige Struktur ausgebildet sein, um mit einem Werkzeug und einer entsprechenden Eingriffsgegenstruktur in Eingriff bringbar zu sein. Der Betätigungsbereich 50 kann dadurch als Kraftangriffsbereich ausgestaltet sein, um das Verbindungsmittel 10 formschlüssig um die Längsrichtung L zu drehen. Ferner kann der Betätigungsabschnitt 50 eine Fase aufweisen, welche dem Verjüngungsabschnitt 60 zugewandt ist, was die Montage vereinfachen kann.

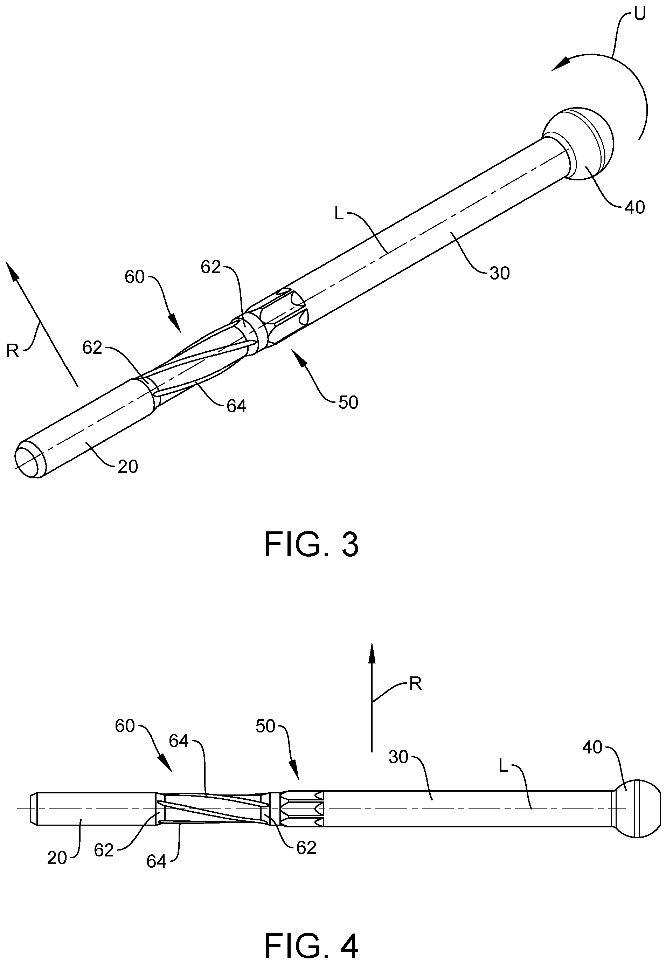

**Figur 3** zeigt ein Verbindungsmittel 10 gemäß einer weiteren Ausführungsform der vorliegenden Erfindung. Die Ausführungsform gemäß Fig. 2 ähnelt der Ausführungsform in Fig. 1, wobei sich die Stege 64 unterscheiden. In Fig. 2 weisen die Stege 64 im Verjüngungsabschnitt 60 einen spiralförmigen, insbesondere helixförmigen, Verlauf auf. Mit anderen Worten weisen die Stege 64 einen verdrehten Verlauf in Richtung der Längsrichtung L und in Umlaufrichtung U auf. Dabei sind die Stege 64 jedoch ebenso mit den beiden Flanken 62 des Verjüngungsabschnitts 60 in Kontakt. In Fig. 2 sind drei Stege 64 sichtbar. Es ist denkbar, dass auch vier oder mehr als vier Stege in der vorliegenden Ausführungsform an dem Verbindungsmittel 10 angeordnet sind. Die Figur 4 zeigt eine andere Perspektive der Ausführungsform der Figur 3.

### Bezugszeichenliste:

- 10: - Verbindungsmittel
- 20: - Gewindeabschnitt
- 30: - Schaftabschnitt
- 40: - Kugelkopf
- 50: - Betätigungsabschnitt
- 60: - Verjüngungsabschnitt
- 62: - Flanke
- 64: - Stege
- L: - Längsrichtung
- R: - Radialrichtung
- U: - Umlaufrichtung

## Patentansprüche

1. Verbindungsmittel (10),
wobei das Verbindungsmittel (10) einen Gewindeabschnitt (20) und einen Kugelkopf (40) aufweist,
wobei das Verbindungsmittel (10) sich in eine Längsrichtung (L) erstreckt, wobei eine Radialrichtung (R) sich senkrecht von der Längsrichtung (L) weg erstreckt,
wobei eine Umlaufrichtung (U) sich um die Längsrichtung (L) erstreckt, wobei in Längsrichtung (L) zwischen dem Gewindeabschnitt (20) und dem Kugelkopf (40) ein Verjüngungsabschnitt (60) angeordnet ist,
**dadurch gekennzeichnet, dass** der Verjüngungsabschnitt (60) in Längsrichtung (L) jeweils durch Flanken (62) begrenzt ist,
wobei der Verjüngungsabschnitt (60) Stege (64) aufweist, wobei die Stege (64) sich von der einen Flanke (62) bis zur anderen Flanke (62) erstrecken.

2. Verbindungsmittel (10) gemäß Anspruch 1,
wobei alle Stege (64) die gleiche Höhe in die Radialrichtung (R) aufweisen.

3. Verbindungsmittel gemäß einem der vorhergehenden Ansprüche,
wobei die Höhe der Stege (64) zu dem Außendurchmesser des Verjüngungsabschnitts (62) in einem Bereich von 0,05 bis 0,15, bevorzugt in einem Bereich von 0,07 bis 0,11, liegt.

4. Verbindungsmittel gemäß einem der vorherigen Ansprüche,
wobei der Abstand der Flanken (62) in Längsrichtung zu einander mindestens 1 cm, bevorzugt mindestens 2 cm, und besonders bevorzugt mindestens 3 cm beträgt.

5. Verbindungsmittel (10) gemäß einem der vorhergehenden Ansprüche, wobei die Stege (64) sich parallel zur Längsrichtung (L) erstrecken, oder wobei die Stege (64) einen verdrehten Verlauf in Richtung der Längsrichtung (L) und oder in Umlaufrichtung (U) aufweisen.

6. Verbindungsmittel (10) gemäß einem der vorhergehenden Ansprüche, wobei die Stege (64) in Umlaufrichtung (U) äquidistant zueinander angeordnet sind.

7. Verbindungsmittel (10) gemäß einem der vorhergehenden Ansprüche, wobei zwischen den Flanken (62) des Verjüngungsabschnitts (60) ein konstanter Außendurchmesser und/oder einen konstanter Kerndurchmesser ausgebildet ist.

8. Verbindungsmittel (10) gemäß einem der vorhergehenden Ansprüche, wobei das Verbindungsmittel (10) einen Betätigungsabschnitt (50) aufweist, wobei der Betätigungsabschnitt (50) einen Mehrkant, insbesondere einen Sechskant, aufweist oder durch einen Mehrkant, insbesondere einen Sechskant, ausgebildet ist.

9. Verbindungsmittel (10) gemäß Anspruch 8,
wobei der Betätigungsabschnitt (50) in Längsrichtung (L) zwischen dem Kugelkopf (40) und dem Verjüngungsabschnitt (60) liegt.

10. Verbindungsmittel (10) gemäß einem der vorgehenden Ansprüche, wobei das Verbindungsmittel (10) einstückig ist.

11. Verbindungsmittel (10) gemäß einem der vorhegenden Ansprüche, wobei zwischen Betätigungsabschnitt (50) oder Verjüngungsabschnitt (60) und dem Kugelkopf (40) ein Schaftabschnitt (30) mit konstantem Durchmesser vorhanden ist.

12. Verbindungsmittel (10) gemäß Anspruch 11,
wobei der Schaftabschnitt (30) eine zylindrische Mantelfläche aufweist.

13. Verwendung eines Verbindungsmittels (10) gemäß einem der vorherigen Ansprüche 1 bis 12 in einem Fahrzeug und/oder als Spurstange.

14. Lenkung eines Fahrzeugs umfassend ein Verbindungsmittel (10) gemäß einem der vorhergehenden Ansprüche 1 bis 12.

15. Verfahren zur Herstellung eines Verbindungsmittels (10), insbesondere nach einem der vorhergehenden Ansprüche 1 bis 12, umfassend die Schritte:
- Bereitstellen eines Verbindungsmittelrohlings, insbesondere durch eine Ablängung eines Drahts;
- Umformen eines Teils des Verbindungsmittelrohlings zur Schaffung eines Verjüngungsabschnitts (60), wobei hierbei Stege (64) und Flanken (62) des Verjüngungsabschnitts (60) ausgeformt werden; und
- Umformen eines Teils des Verbindungsmittelrohlings zur Schaffung eines Gewindeabschnitts (20),
**dadurch gekennzeichnet, dass** beim Umformen eines Teils des Verbindungsmittelrohlings zur Schaffung eines Verjüngungsabschnitts (60) die Flanken (62) den Verjüngungsabschnitt (60) jeweils in Längsrichtung (L) begrenzen und die Stege (64) sich von der einen Flanke (62) bis zur anderen Flanke (62) erstrecken.

## Claims

1. Fastener (10),
wherein the fastener (10) has a threaded section (20) and a ball head (40), wherein the fastener (10) extends in a longitudinal direction (L),
wherein a radial direction (R) extends perpendicularly away from the longitudinal direction (L),
wherein a circumferential direction (U) extends around the longitudinal direction (L),
wherein a tapered section (60) is arranged in the longitudinal direction (L) between the threaded section (20) and the ball head (40),
**characterized in that** the tapered section (60) is bounded in the longitudinal direction (L) in each case by flanks (62),
wherein the tapered section (60) has webs (64), wherein the webs (64) extend from one flank (62) to the other flank (62).

2. Fastener (10) according to claim 1,
wherein all webs (64) have the same height in the radial direction (R).

3. Fastener according to any one of the preceding claims,
wherein the height of the webs (64) relative to the outer diameter of the tapered section (62) is in a range from 0.05 to 0.15, preferably in a range from 0.07 to 0.11.

4. Fastener according to any one of the preceding claims,
wherein the distance between the flanks (62) in the longitudinal direction is at least 1 cm, preferably at least 2 cm, and particularly preferably at least 3 cm.

5. Fastener (10) according to any one of the preceding claims,
wherein the webs (64) extend parallel to the longitudinal direction (L), or
wherein the webs (64) have a twisted course in the direction of the longitudinal direction (L) and or in the circumferential direction (U).

6. Fastener (10) according to any one of the preceding claims,
wherein the webs (64) are arranged equidistant from each other in the circumferential direction (U).

7. Fastener (10) according to any one of the preceding claims,
wherein a constant outer diameter and/or a constant core diameter is formed between the flanks (62) of the tapered section (60).

8. Fastener (10) according to any one of the preceding claims,
wherein the fastener (10) comprises an actuating section (50),
wherein the actuating section (50) comprises a multi-edge profile, in particular a hexagon, or is formed by a multi-edge profile, in particular a hexagon.

9. Fastener (10) according to claim 8,
wherein the actuating section (50) is located in the longitudinal direction (L) between the ball head (40) and the tapered section (60).

10. Fastener (10) according to any one of the preceding claims,
wherein the fastener (10) is in one piece.

11. Fastener (10) according to any one of the preceding claims,
wherein a shank section (30) with a constant diameter is present between the actuating section (50) or tapered section (60) and the ball head (40).

12. Fastener (10) according to claim 11,
wherein the shank section (30) has a cylindrical lateral surface.

13. Use of a fastener (10) according to any of the preceding claims 1 to 12 in a vehicle and/or as a tie rod.

14. Steering of a vehicle comprising a fastener (10) according to any one of the preceding claims 1 to 12.

15. Method of manufacturing a fastener (10), in particular according to any one of the preceding claims 1 to 12, comprising the steps of:
- Providing a fastener blank, in particular by cutting a wire to length;
- Forming a part of the fastener blank to create a tapered section (60), wherein webs (64) and flanks (62) of the tapered section (60) are formed, and
- Forming a part of the fastener blank to create a threaded section (20) **characterized in that** when forming a part of the fastener blank to create a threaded section (20), the flanks (62) each bound the tapered section (60) in the longitudinal direction (L) and the webs (64) extend from one flank (62) to the other flank (62).

## Revendications

1. Moyen de liaison (10),
dans lequel le moyen de liaison (10) présente une section à filetage (20) et une tête sphérique (40),
dans lequel le moyen de liaison (10) s'étend dans une direction longitudinale (L),
dans lequel une direction radiale (R) s'étend perpendiculairement en éloignement de la direction longitudinale (L),
dans lequel une direction circonférentielle (U) s'étend autour de la direction longitudinale (L),
dans lequel une section de rétrécissement (60) est agencée dans la direction longitudinale (L) entre la section à filetage (20) et la tête sphérique (40), **caractérisé en ce que** la section de rétrécissement (60) est limitée dans la direction longitudinale (L) par des flancs (62),
dans lequel la section de rétrécissement (60) présente des barrettes (64), les barrettes (64) s'étendant depuis un flanc (62) jusqu'à l'autre flanc (62).

2. Moyen de liaison (10) selon la revendication 1,
dans lequel toutes les barrettes (64) présentent la même hauteur dans la direction radiale (R).

3. Moyen de liaison selon l'une des revendications précédentes,
dans lequel la hauteur des barrettes (64) par rapport au diamètre extérieur de la section de rétrécissement (62) se trouve dans une plage de 0,05 à 0,15, de préférence dans une plage de 0,07 à 0,11.

4. Moyen de liaison selon l'une des revendications précédentes,
dans lequel la distance des flancs (62) l'un par rapport à l'autre dans la direction longitudinale est d'au moins 1 cm, de préférence d'au moins 2 cm, et de toute préférence d'au moins 3 cm.

5. Moyen de liaison (10) selon l'une des revendications précédentes,
dans lequel les barrettes (64) s'étendent parallèlement à la direction longitudinale (L), ou
dans lequel les barrettes (64) présentent un tracé torsadé le long de la direction longitudinale (L) et/ou de la direction circonférentielle (U).

6. Moyen de liaison (10) selon l'une des revendications précédentes, dans lequel les barrettes (64) sont agencées dans la direction circonférentielle (U) à équidistance les unes des autres.

7. Moyen de liaison (10) selon l'une des revendications précédentes, dans lequel il est réalisé entre les flancs (62) de la section de rétrécissement (60) un diamètre extérieur constant et/ou un diamètre d'âme constant.

8. Moyen de liaison (10) selon l'une des revendications précédentes,
dans lequel le moyen de liaison (10) présente une section d'actionnement (50),
dans lequel la section d'actionnement (50) présente une forme polygonale, en particulier un hexagone, ou est réalisée par une forme polygonale, en particulier un hexagone.

9. Moyen de liaison (10) selon la revendication 8,
dans lequel la section d'actionnement (50) se trouve dans la direction longitudinale (L) entre la tête sphérique (40) et la section de rétrécissement (60).

10. Moyen de liaison (10) selon l'une des revendications précédentes, dans lequel le moyen de liaison (10) est d'un seul tenant.

11. Moyen de liaison (10) selon l'une des revendications précédentes, dans lequel une section tige (30) à diamètre constant est présente entre la section d'actionnement (50) ou la section de rétrécissement (60) et la tête sphérique (40).

12. Moyen de liaison (10) selon la revendication 11,
dans lequel la section tige (30) présente une surface latérale cylindrique.

13. Utilisation d'un moyen de liaison (10) selon l'une des revendications précédentes 1 à 12 dans un véhicule et/ou en tant que barre d'accouplement.

14. Direction d'un véhicule comprenant un moyen de liaison (10) selon l'une des revendications précédentes 1 à 12.

15. Procédé de réalisation d'un moyen de liaison (10), en particulier selon l'une des revendications précédentes 1 à 12, comprenant les étapes consistant à :
- fournir une ébauche de moyen de liaison, en particulier en coupant un fil à une certaine longueur ;
- déformer une partie de l'ébauche de moyen de liaison pour obtenir une section de rétrécissement (60), moulant ainsi des barrettes (64) et des flancs (62) de la section de rétrécissement (60) ; et
- déformer une partie de l'ébauche de moyen de liaison pour créer une section à filetage (20),
**caractérisé en ce que**, lors de la déformation d'une partie de l'ébauche de moyen de liaison pour obtenir une section de rétrécissement (60), les flancs (62) limitent chacun la partie de rétrécissement (60) dans la direction de la longueur (L) et les barrettes (64) s'étendent depuis un flanc (62) jusqu'à l'autre flanc (62).
